# EUROPÄISCHE PATENTSCHRIFT

(11) **EP 2 266 845 B1**
(45) Veröffentlichungstag und Bekanntmachung des Hinweises auf die Patenterteilung: **29.08.2012**
(21) Anmeldenummer: 10002783.8
(22) Anmeldetag: 17.03.2010
(51) Int. Cl.: B60R 16/02, F21V 17/00, B60Q 1/00

(54) **Verfahren zum Verlegen und Vorrichtung zum Führen und Befestigen von Kabeln eines Kabelbaums im Inneren eines Gehäuses einer Beleuchtungseinrichtung eines Kraftfahrzeugs**
Method for laying and device for guiding and fixing cables of a harness in the interior of a housing of a lighting device of a motor vehicle
Procédé d'installation et dispositif de guidage et de fixation de câbles d'un faisceau de câbles à l'intérieur d'un boîtier d'un dispositif d'éclairage d'un véhicule automobile

(30) Priorität: 22.06.2009 DE 102009030352
(43) Veröffentlichungstag der Anmeldung: 29.12.2010
(73) Patentinhaber: Automotive Lighting Reutlingen GmbH, 72762 Reutlingen (DE)
(72) Erfinder: Wezel, Thomas, 72768 Reutlingen (DE); Fähnle, Andres, 72793 Pfullingen (DE); Dobler, Karl-Otto, 72768 Reutlingen (DE); Müller, Alexander, 72764 Reutlingen (DE); Maurer, Steffen, 72135 Dettenhausen (DE); Nagel, Klaus, 72770 Reutlingen (DE)
(74) Vertreter: Dreiss

(56) Entgegenhaltungen:
- DE-A1- 19 628 850
- DE-A1- 19 704 067
- DE-A1-102006 020 959

## Beschreibung

Die vorliegende Erfindung betrifft ein Verfahren zum Verlegen von Kabeln eines Kabelbaums im Inneren eines Gehäuses einer Beleuchtungseinrichtung eines Kraftfahrzeugs. Die Erfindung betrifft außerdem eine Vorrichtung zum Führen und Befestigen von Kabeln eines Kabelbaums im Inneren eines Gehäuses einer Beleuchtungseinrichtung eines Kraftfahrzeugs.

Aus dem Stand der Technik ist es bekannt, Kabel, die zur Kontaktierung von Lichtmodulen und anderer elektrischer Bauteile von Kraftfahrzeugscheinwerfern oder -leuchten dienen, vor deren Montage im Inneren des Scheinwerfer- oder Leuchtengehäuses bspw. mittels herkömmlicher Kabelbinder oder Klebeband zu einem Kabelbaum zusammenzufassen. Dabei werden Kabel unterschiedlicher Länge und unterschiedlicher Typen zu einem Kabelbaum zusammengefasst. Die unterschiedlichen Typen umfassen bspw. Kabel mit unterschiedlicher Anzahl an Adern, Kabel mit verschiedenen Isolationen (z.B. Farbe, Material) und/oder Abschirmungen (z.B. Metallgeflecht, Material des Geflechts). In verschiedenen Bereichen ist es außerdem üblich, Lichtleiter oder Glasfaserkabel, die zur Signal- und/oder Datenübertragung eingesetzt werden, ebenfalls in Kabelbäumen zu integrieren. An den Enden zumindest einiger der Kabel sind Steckkontaktelemente in Form von Buchsen oder Steckern angeschlossen, welche eine einfache und schnelle Kontaktierung der Kabel an den dafür vorgesehenen elektrischen Bauteilen des Scheinwerfers bzw. der Leuchte ermöglichen.

Zur Montage werden die Kabel des Kabelbaums einzeln im Inneren des Scheinwerfer- bzw. Leuchtengehäuses verlegt und befestigt, indem sie bspw. in dafür vorgesehene Kabelhalter gedrückt werden. Die Kabelhalter sind bspw. einstückig am Gehäuseinneren ausgebildet. Anschließend werden die im Gehäuse verlegten Kabel bspw. über die Steckkontaktelemente an den vorgesehenen elektrischen Bauteilen angeschlossen. Schließlich werden die über die Kabel des Kabelbaums elektrisch kontaktierten Bauteile des Scheinwerfers bzw. der Leuchte in dem Gehäuse positioniert und in vorgesehenen Positionen befestigt. Nach dem Anordnen von optischen Zierblenden im Inneren des Gehäuses, welche bspw. die im Gehäuseinneren verlegten Kabel sowie die Befestigungsstellen der Bauteile im Gehäuseinneren vor Blicken von außen verdecken sollen, wird der Scheinwerfer mit einer lichtdurchlässigen Abdeckscheibe verschlossen.

Problematisch bei dem bekannten Verfahren ist, dass die Kabel des Kabelbaums zum Verlegen im Scheinwerfer- bzw. Leuchtengehäuse und zur Kontaktierung der elektrischen Bauteile mit den im Gehäuse verlegten Kabeln möglichst lang ausgebildet sein sollten. Kurze Kabel erschweren das Verlegen und Befestigen der Kabel im Gehäuseinneren erheblich. Beim Kontaktieren von kurzen Kabeln an den elektrischen Bauteilen des Scheinwerfers bzw. der Leuchte kann es sogar vorkommen, dass im Gehäuseinneren bereits verlegte und an der Gehäuseinnenseite befestigte Kabel wieder losgerissen werden und/oder sich bereits geschlossene Kontakte anderer Kabel zu anderen elektrischen Bauteilen wieder lösen. Andererseits ist der Platzbedarf von langen Kabeln im Gehäuseinneren relativ groß, zu lange Kabel verursachen zusätzliches Gewicht und vermeidbare Kosten. Außerdem sind zu lange Kabel nur schwer vor Blicken von außen durch die Abdeckscheibe zu verstecken. Im Gehäuseinneren nicht ordnungsgemäß befestigte Kabel können beim Blick von außen in das Innere des Scheinwerfers bzw. der Leuchte zu einer optischen Beeinträchtigung, zu akustisch störenden Vibrationsgeräuschen und sogar zu erheblichen Gefahren führen, wenn sie in den Bereich zu hoher Temperaturen gelangen (z.B. in der Nähe einer Lichtquelle, insbesondere einer Gasentladungslampe) oder mechanisch eingeklemmt werden, bspw. zwischen einem im Gehäuse horizontal oder vertikal verstellbaren Lichtmodul und dem Gehäuse.

Ein weiteres Problem ergibt sich daraus, dass insbesondere moderne Kraftfahrzeugscheinwerfer eine immer größere Anzahl an Funktionen aufweisen, für deren Realisierung im Gehäuseinneren zusätzliche elektrische Bauteile vorgesehen und mit elektrischen Signalen und elektrischer Energie versorgt werden müssen. Solche Funktionen sind bspw. dynamisches Kurvenlicht (realisiert durch ein mittels eines geeigneten Aktuators horizontal bewegbares Lichtmodul), Leuchtweitenregelung (realisiert durch ein mittels eines geeigneten Aktuators vertikal bewegbares Lichtmodul), adaptive Lichtverteilung (adaptive front lighting, AFL, oder adaptive front lighting system, AFS; realisiert durch eine mittels eines geeigneten Aktuators bewegbare Blendenanordnung zur Erzeugung einer variablen Helldunkelgrenze), Gasentladungslampen oder LEDs als Lichtquellen (erfordern zusätzliche aktive Lüfter) und vieles mehr.

Das Dokument DE 10 2006 020959 A1 ist als nächstliegender Stand der Technik nach dem Oberbegriff des Anspruchs 1 zu sehen.

Ausgehend von dem beschriebenen Stand der Technik liegt der vorliegenden Erfindung die Aufgabe zugrunde, das Verlegen und Befestigen von Kabeln eines Kabelbaums im Inneren eines Scheinwerfer- oder Leuchtengehäuses eines Kraftfahrzeugs zu verbessern.

Zur Lösung dieser Aufgabe wird ausgehend von dem Verfahren der eingangs genannten Art vorgeschlagen, dass das Verfahren die nachfolgenden Schritte aufweist:
- die zu verlegenden Kabel werden zumindest teilweise außerhalb des Gehäuses in mindestens einen vom Gehäuse separaten starren Kabelkanal eingesetzt;
- die eingesetzten Kabel werden in dem mindestens einen Kabelkanal befestigt; und
- der mindestens eine Kabelkanal wird mit den darin verlaufenden Kabeln als Montageeinheit in das Innere des Gehäuses eingeführt und dort am Gehäuse befestigt.

Das Einsetzen der Kabel des Kabelbaums in den Kabelkanal kann außerhalb des Gehäuses der Beleuchtungseinrichtung erfolgen. Dadurch kann das Einsetzen der Kabel in den Kabelkanal in einer günstigen Arbeitsposition mit herkömmlichen Werkzeugen und ausreichend Platz einfach und schnell realisiert werden. Durch den Kabelkanal erhält der Kabelbaum zumindest teilweise eine starre Struktur, durch welche die Handhabung des Kabelbaums außerhalb des Gehäuses der Beleuchtungseinrichtung erheblich erleichtert wird. Insbesondere wird das Einführen des Kabelbaums in das Gehäuseinnere erheblich vereinfacht, da die Kabel gewissermaßen als eine Montageeinheit in das Gehäuseinnere eingeführt werden können. Auch die Befestigung der Kabel im Gehäuseinneren wird durch den Kabelkanal erleichtert, da eine Sicherung des Kabelkanals an einer einzigen Stelle ausreicht, die Kabel zu befestigen. Zudem kann die Befestigung des starren Kabelkanals an der Innenseite des ebenfalls starren Gehäuses besonders einfach und schnell realisiert werden. Des Weiteren ist durch die Verwendung von mindestens einem Kabelkanal der Verlauf der Kabel im Gehäuseinneren stets genau definiert und vorgegeben. Schließlich werden Ausfälle der montierten Beleuchtungseinrichtung auf ein Minimum reduziert, da sich beim Kontaktieren der Kabel mit den elektrischen Bauteilen der Beleuchtungseinrichtung zuvor geschlossene Kontakte nicht mehr lösen können.

Vorteilhafterweise werden durch den mindestens einen Kabelkanal der Montageeinheit alle Kabel des Kabelbaums zu einem einzigen starren Kabelskelett zusammengefasst, das als Ganzes in das Innere des Gehäuses eingeführt und dort am Gehäuse gesichert wird. Auf diese Weise ist die Handhabbarkeit des Kabelbaums und dessen Anordnung und Befestigung im Gehäuseinneren besonders vereinfacht.

Eine besonders einfache Befestigung des Kabelbaums an der Gehäuseinnenseite ergibt sich, wenn jeder Kabelkanal oder das Kabelskelett nur an einer einzigen Stelle am Gehäuse gesichert wird. Dabei wird vorzugsweise jeder Kabelkanal oder das Kabelskelett mittels geeigneter Führungselemente in das Gehäuse eingeführt und an einer vorgegebenen Position an einer Innenseite des Gehäuses angeordnet, jeder Kabelkanal oder das Kabelskelett durch die Führungselemente in der vorgegebenen Position und in einer vorgegebenen Ausrichtung relativ zu Gehäuse gehalten und jeder Kabelkanal oder das Kabelskelett an einer einzigen Stelle am Gehäuse gesichert.

Der mindestens eine Kabelkanal mit den darin verlegten und daran befestigten Kabeln des Kabelkanals wird in einer Einführbewegung in das Innere des Gehäuses eingeführt und dort an einer vorgegebenen Position befestigt. Besonders bevorzugt ist es, wenn die Führungselemente einerseits sich in Richtung der Einführbewegung des Kabelkanals bzw. des Kabelskeletts in das Gehäuse erstreckende Führungsstifte am Gehäuse oder dem Kabelkanal bzw. dem Kabelskelett und andererseits entsprechende Öffnungen oder Aussparungen am Kabelkanal bzw. am Kabelskelett oder am Gehäuse umfassen. Beim Einführen des mindestens einen Kabelkanals oder des Kabelskelets in das Gehäuseinnere treten die Öffnungen mit den Führungsstiften in Eingriff und Führen den Kabelkanal an eine vorgegebene Position im Gehäuseinneren. Dabei ist vorgesehen, dass an dem Kabelkanal Führungsstifte und/oder Öffnungen angeordnet sein können, wobei an dem Gehäuse der Beleuchtungseinrichtung entsprechende Öffnungen bzw. Führungsstift ausgebildet sind.

Gemäß einer bevorzugten Ausführungsform der Erfindung wird vorgeschlagen, dass der mindestens eine Kabelkanal bzw. das Kabelskelett mittels einer Schraube oder eine Clipsverbindung am Gehäuse gesichert bzw. befestigt wird. Bei Verwendung geeigneter Führungselemente genügt eine einzige Schraube bzw. Clipsverbindung zur Sicherung des Kabelkanals bzw. des Kabelskeletts am Gehäuse der Beleuchtungseinrichtung.

Die in dem mindestens einen Kabelkanal verlaufenden Kabel können auf beliebige Weise am Kabelkanal befestigt werden. Da die Befestigung der Kabel am Kabelkanal außerhalb des Gehäuses der Beleuchtungseinrichtung ausgeführt werden kann, können auch an sich aufwendige Befestigungsmittel oder Befestigungsverfahren eingesetzt werden, ohne dass sich dadurch insgesamt eine längere oder aufwendigere Befestigung der Kabel im Gehäuse der Beleuchtungseinrichtung ergäbe. Bessere Zugänglichkeit sowie die Möglichkeit eines höheren Automatisierungsgrads des erfindungsgemäßen Verfahrens machen die Befestigung der Kabel im Kabelkanal besonders schnell und einfach. Insbesondere ist daran gedacht die Kabel mittels Kabelbinder, Klammern, Filmscharnierelemente oder eines Klebebands an dem mindestens einen Kabelkanal zu befestigen. Es ist denkbar, dass die Kabel in dem Kabelkanal mittels Zügentlastungsmittel, bspw. in Form von Kabelbindern, gehalten werden, damit sich in Längsrichtung des Kabelkanals nicht aus dem Kabelkanal gezogen werden können. Die Filmscharnierelemente können einstückig am Kabelkanal ausgebildet sein und bspw. mittels Spritzgießen in einem Arbeitsschritt mit der Herstellung des Kabelkanals an diesen angespritzt werden.

Besonders vorteilhaft für eine Handhabung des Kabelkanals außerhalb des Gehäuses der Beleuchtungseinrichtung ist, dass nach dem Einsetzen und Befestigen der Kabel in dem mindestens einen Kabelkanal an den Enden der Kabel angeschlossene Steckkontaktelemente an dafür am Kabelkanal vorgesehenen Aufnahmepositionen lösbar befestigt werden. Anschießend kann der Kabelkanal ohne daran baumelnde Steckkontaktelemente gelagert und zur Position zum Einbau des Kabelkanals in das Gehäuseinnere transportiert werden.

Besonders bevorzugt ist es, wenn ein Lichtmodul oder ein anderes elektrisches Bauteil der Beleuchtungseinrichtung mit einem Teil der Kabel vor der Montage des mindestens einen Kabelkanals bzw. des Kabelskeletts außerhalb des Gehäuses erfolgt und die elektrischen Komponenten oder Bauteile zusammen mit dem mindestens einen Kabelkanal bzw. dem Kabelskelett als Montageeinheit im Inneren des Gehäuses angeordnet und dort befestigt wird. Demnach werden die Kabel des Kabelbaums bereits außerhalb der Beleuchtungseinrichtung mit den elektrischen Bauteilen des Scheinwerfers bzw. der Leuchte kontaktiert und die durch den mindestens einen Kabelkanal in eine starre Struktur gebrachten Kabel des Kabelbaums sowie die daran angeschlossenen elektrischen Bauteile als eine Montageeinheit in dem Gehäuseinneren angeordnet und der Kabelkanal sowie die elektrischen Bauteile an den jeweils vorgesehenen Positionen befestigt.

Als eine weitere Lösung der Aufgabe der vorliegenden Erfindung wird ausgehend von der Vorrichtung der eingangs genannten Art vorgeschlagen, dass die Vorrichtung mindestens einen vom Gehäuse separaten starren Kabelbaum zur Aufnahme zumindest eines Teils der zu verlegenden Kabel, Mittel zum Befestigen der von dem mindestens einen Kabelkanal aufgenommenen Kabel in dem mindestens einen Kabelkanal und Mittel zur Befestigung des mindestens einen Kabelkanals mit den darin verlaufenden Kabeln als Montageeinheit im Inneren des Gehäuses aufweist.

Gemäß einer vorteilhaften Weiterbildung der Erfindung wird vorgeschlagen, dass die Form des mindestens einen Kabelkanals der Form eines Innenbereichs des Gehäuses entspricht, wo der Kabelkanal angeordnet und befestigt wird. Mit anderen Worten: Die Form des Kabelkanals ist als räumliches Gebilde der Gehäusekontur angepasst. Dadurch kann der Kabelkanal möglichst Platz sparend im Gehäuseinneren, dicht an der Innenseite der Gehäusewandung, dem Verlauf der Wandung folgend angeordnet werden.

Gemäß einer bevorzugten Ausführungsform der Erfindung ist der mindestens eine Kabelkanal aus Kunststoff gefertigt. Das hat Vorteile hinsichtlich Gewicht (Kunststoff ist in der Regel relativ leicht), Kosten (die Herstellung bspw. im Spritzgussverfahren ist kostengünstig möglich), und elektrischer Isolation (Kunststoff ist ein guter Isolator). Vorzugsweise werden thermisch besonders resistente Kunststoffe für den Kabelkanal verwendet, oder der Kabelkanal so ausgebildet und im Gehäuseinneren angeordnet, dass er weit genug entfernt von Wärme erzeugenden Bauteilen verläuft.

Zur Verbesserung der Handhabbarkeit des im Kabelkanal angeordneten Kabelbaums wird vorgeschlagen, dass der mindestens eine Kabelkanal Aufnahmemittel zum lösbaren Befestigen von an den Enden der Kabel angeschlossenen Steckkontaktelementen aufweist. Nach dem Anordnen und Befestigen der Kabel im Kabelkanal können die Kabelenden mit den Steckerkontaktelementen an diesen Aufnahmemittels befestigt werden, so dass die Kabelenden beim Transport und der Lagerung des Kabelbaums nicht lose herum baumeln. Außerdem ist sichergestellt, dass jedes Steckerkontaktelement an einer definierten Position am Kabelbaum angeordnet ist und zur Kontaktierung mit den elektrischen Bauteilen des Scheinwerfers bzw. der Leuchte vor oder nach dem Einführen des Kabelkanals in das Gehäuseinnere zur Verfügung steht. Die Gefahr einer versehentlichen Fehlkontaktierung wird dadurch weiter reduziert.

Grundsätzlich ist das hier beschriebene Verfahren und die beschriebene Vorrichtung auch bei einer außerhalb eines Gehäuses einer Beleuchtungseinrichtung angeordneten Verkabelung sowie bei innen- oder außenliegenden Verkabelungen von Signal-, Bug- und Heckleuchten in entsprechender Weise einsetzbar.

Ein bevorzugtes Ausführungsbeispiel der Erfindung wird nachfolgend anhand der Figuren näher erläutert. Es zeigen:
- Figur 1: einen Kabelkanal einer erfindungsgemäßen Vorrichtung mit darin angeordneten Kabeln eines Kabelbaums für eine Beleuchtungseinrichtung eines Kraftfahrzeugs gemäß einer ersten bevorzugten Ausführungsform;
- Figur 2: einen Kabelkanal einer erfindungsgemäßen Vorrichtung mit darin angeordneten Kabeln eines Kabelbaums für eine Beleuchtungseinrichtung eines Kraftfahrzeugs gemäß einer zweiten bevorzugten Ausführungsform; und
- Figur 3: im Inneren eines Scheinwerfergehäuses angeordnete und dort befestigte Kabelbäume nach Figur 1 und Figur 2.

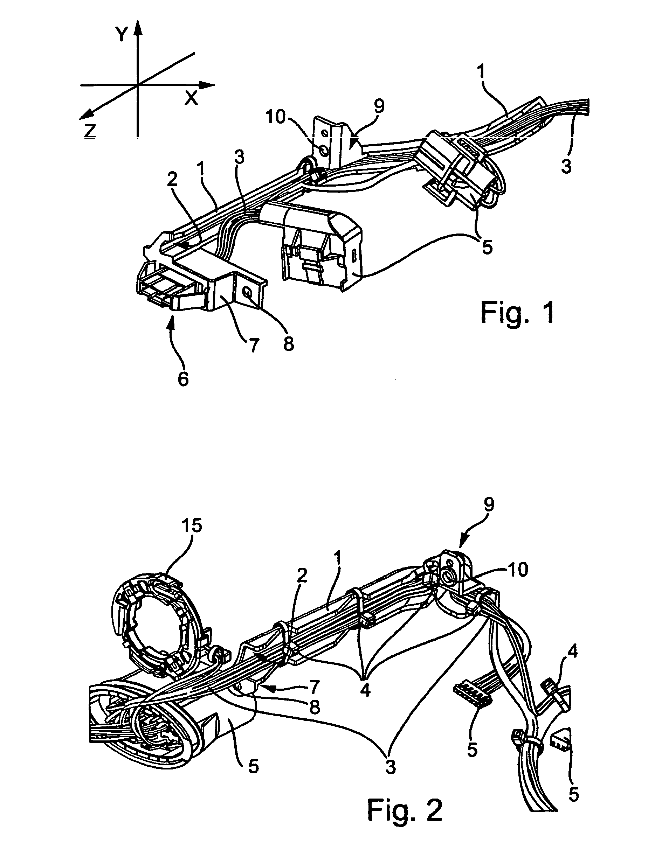

In Figur 1 ist ein Kabelkanal einer erfindungsgemäßen Vorrichtung in seiner Gesamtheit mit dem Bezugszeichen 1 bezeichnet. Der Kabelkanal 1 ist aus Kunststoff gefertigt und weist eine beliebige Form im dreidimensionalen Raum auf. Der Kabelkanal 1 weist einen U- oder V-förmigen Querschnitt auf. Im Inneren des U- oder V-förmigen Querschnitts ist entlang der Längserstreckung des Kabelbaums 1 ein Aufnahmeabschnitt 2 ausgebildet, der zur Aufnahme zumindest eines Teils von Kabeln 3 dient. Die Kabel 3 dienen zur elektrischen Kontaktierung von elektrischen Bauteilen eines Scheinwerfers oder einer Leuchte eines Kraftfahrzeugs. Als zu kontaktierende elektrische Bauteile kommen bspw. elektrische Aktuatoren (z.B. Elektromotoren, Elektromagnete, Piezoaktoren) zur Betätigung verstellbarer Elemente eines Lichtmoduls (z.B. Blende, Reflektor, Lichtquelle) oder des gesamten Lichtmoduls, Lichtquellen (z.B. Glühlampen, Gasentladungslampen, Halbleiterlichtquellen (LEDs)) oder Steuergeräte zur Ansteuerung der genannten Bauteile in Betracht. Die elektrische Kontaktierung kann dabei sowohl eine Versorgung mit elektrischer Energie als auch eine Übermittlung von elektrischen Informationssignalen (z.B. zum Ansteuern oder zum Übertragen von Zustandsinformationen oder Messwerten) umfassen.

Die Kabel 3 des Kabelbaums verlaufen über mehr oder weniger lange Strecken in dem Aufnahmeabschnitt 2 des Kabelkanals 3. Sie können den Aufnahmeabschnitt 2 in Längsrichtung des Kabelkanals 1 betrachtet an beliebigen entsprechend vorgesehenen Stellen verlassen und zur Kontaktierung eines oder mehrerer elektrischer Bauteile abzweigen. Die Kabel 3 eines Kabelbaums können unterschiedlich ausgebildet sein. Sie weisen bspw. unterschiedliche Längen auf, haben eine unterschiedliche Anzahl an Adern, sind als Litzen oder Kabel ausgestaltet, weisen verschiedene Isolationen (z.B. Farbe, Material) oder Abschirmungen (z.B. Metallgeflecht o.ä., Material und Flexibilität des Geflechts) auf. Selbstverständlich kann der Kabelbaum auch Lichtleiter oder Glasfaserkabel zur Daten- und/oder Signalübertragung umfassen. Die Kabel 3 können mittels Kabelbinder 4, Klammern oder eines Klebebands an dem Kabelkanal 1 befestigt werden. Die Kabelbinder 4 können auch als Zugentlastung dienen. Besonders vorteilhaft ist die Befestigung der Kabel 3 in dem Kabelbaum 1 mittels Filmscharniere (nicht dargestellt), die einstückig mit dem Kabelbaum 1 ausgebildet und in einem Arbeitsschritt mit diesem bspw. in einem Spritzgussverfahren hergestellt sein können. Die Filmscharniere sind quer zur Längserstreckung des Kabelkanals 1 zwischen einer Freigabestellung und einer Verriegelungsstellung verschwenkbar. In der Verriegelungsstellung verschließen sie den Aufnahmeabschnitt 2 und halten so die Kabel 3 in dem Kabelkanal 1. In der Freigabestellung sind die Filmscharniere geöffnet und geben den Zugang zum Aufnahmeabschnitt 2 frei.

Die Enden der Kabel 3 enden in einem von mehreren vorzugsweise unterschiedlich ausgestalteten Steckerkontaktelementen 5, das als ein Stecker- oder als ein Buchsenelement ausgebildet sein kann. Je nach erforderlicher bzw. gewünschter Funktionalität der kontaktierten elektrischen Bauteile haben die Stecker mehr oder weniger Kontakte. Die Steckerkontaktelemente 5 werden mit einem oder mehreren entsprechend ausgestalteten Steckerkontaktelementen (nicht dargestellt) der zu kontaktierenden elektrischen Bauteile des Scheinwerfers bzw. der Leuchte zusammengesteckt, so dass sich ein elektrischer Kontakt ergibt. Ferner können an den Kabelenden Kontaktträger bspw. für one-touch Lampen oder für one-touch Lampenträger angebracht sein. Bei one-touch Lösungen können Lampen mit einer Hand in eine entsprechende Position eingeführt und dort durch eine geeignete Bewegung, bspw. durch eine Drehung, sowohl mechanisch befestigt (z.B. bajonettiert) als auch elektrisch kontaktiert werden.

Zur besseren Handhabbarkeit des Kabelbaums weist der Kabelkanal 1 Aufnahmepositionen 6 auf, an denen nach dem Einsetzen und Befestigen der Kabel 3 in dem Kabelkanal 1 zumindest einige der Steckerkontaktelemente 5 lösbar befestigt werden können. Ein Herumbaumeln beim Transport und der Lagerung der Kabelbäume wird so verhindert. Zudem wird die Montage des Kabelbaums im Inneren eines Gehäuses eines Scheinwerfers oder einer Leuchte erleichtert, da das zur Kontaktierung eines bestimmten elektrischen Bauteils erforderliche Steckerkontaktelement 5 von nacheinander in verschiedenen Gehäusen zu montierenden Kabelbäumen immer an der gleichen Position, nämlich der Aufnahmeposition 6, zur Verfügung steht, unmittelbar ergriffen und kontaktiert werden können. Die Gefahr einer versehentlichen Fehlkontaktierung wird dadurch ebenfalls zuverlässig verringert.

Die gesamten oben beschriebenen Schritte einer Anordnung und Befestigung der Kabel 3 des Kabelbaums in dem Kabelkanal 1, sowie eine Anordnung der Steckerkontaktelemente 5 an den Aufnahmepositionen 6 des Kabelkanals 1 kann außerhalb des Gehäuses der Beleuchtungseinrichtung an einer dafür vorgesehenen Montageposition erfolgen. Dadurch können diese Schritte besonders einfach, bequem und schnell ausgeführt werden. Zudem ist - anders als im beengten Inneren von Beleuchtungseinrichtungen - eine Automatisierung mit herkömmlichen Maschinen und Werkzeugen problemlos möglich, da die Montageposition entsprechend ausgestaltet werden kann. Auch die Kabel 3 können an der Montageposition außerhalb des Gehäuses der Beleuchtungseinrichtung mit den elektrischen Bauelementen kontaktiert werden.

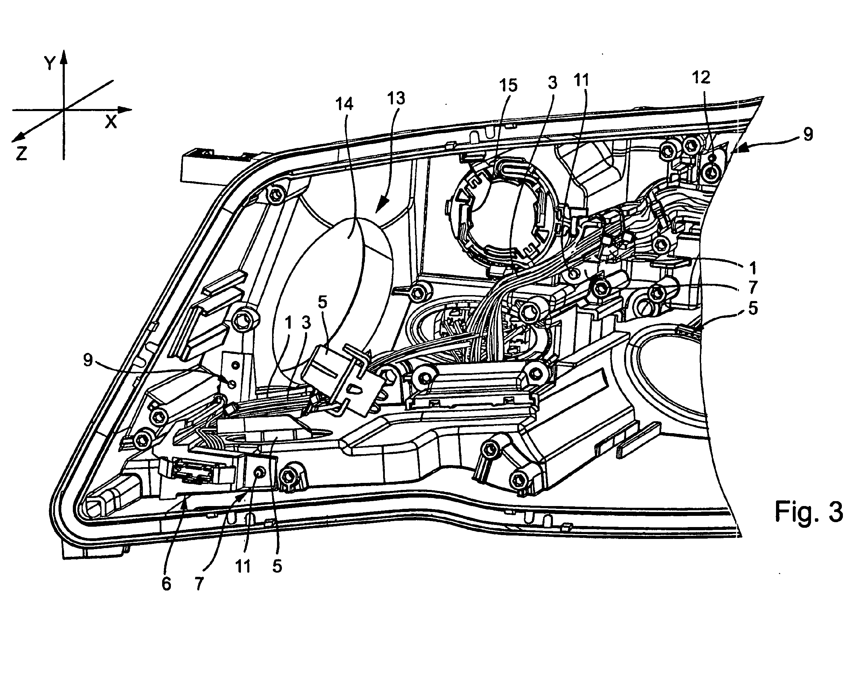

Der fertig montierte Kabelkanal 1, wie er bspw. in den Figuren 1 oder 2 dargestellt ist, wird dann als eine Montageeinheit im Inneren des Gehäuses angeordnet und dort befestigt. Aufgrund der starren Skelettstruktur des Kabelbaums aufgrund des mindestens einen Kabelkanals 1 kann dieser besonders einfach gehandhabt und in das Innere des Gehäuses eingeführt werden. Dort kann der Kabelkanal 1 an einer vorgegebenen Position auf besonders einfache Weise gesichert werden. Vorzugsweise weist der Kabelkanal 1 Teil von Führungsmitteln 7 in Form einer Öffnung 8 auf, in die beim Einführen des Kanals 1 in das Gehäuseinnere ein entsprechender Führungsstift (vgl. Bezugszeichen 11 in Figur 3) eingreift. Dadurch ist die Position des Kabelkanals 1 bereits in einer Ebene (zwei Richtungen x, y) quer zur Längserstreckung des Führungsstifts definiert und gesichert. Die Sicherung der Position des Kabelkanals in der dritten Richtung (z) kann durch Sicherungsmittel 9 erfolgen, die bspw. eine Schraube (vgl. Bezugszeichen 12 in Figur 3) aufweisen, die durch eine Öffnung 10 am Kabelkanal 1 hindurchtritt und in das Gehäuse geschraubt wird. Selbstverständlich sind auch andere Sicherungsmittel als Schrauben denkbar, z.B. Nieten, Clipsverbindungen, Rastverbindungen, etc. Selbstverständlich ist es auch denkbar die Anzahl und Anordnung von Führungsmitteln 7 und Sicherungsmitteln 9 gegenüber den dargestellten Ausführungsbeispielen zu variieren. Es wäre auch denkbar, nur Sicherungsmittel 9 anzuordnen und auf Führungsmittel 7 ganz zu verzichten. Allerdings erlauben die Führungsmittel 7 die Sicherung des Kabelkanals 1 in einer Ebene alleine durch Einführen des Kanals 1 in das Gehäuse. Es wäre sogar denkbar, dass die Führungsmittel 7 und die Sicherungsmittel 9 als eine integrale Einheit ausgebildet sind.

Falls die elektrischen Bauteile der Beleuchtungseinrichtung noch vor dem Einführen des Kanals 1 in das Innere des Gehäuses der Beleuchtungseinrichtung kontaktiert wurden, umfasst die einzuführende Montageeinheit neben den in den Figuren 1 oder 2 dargestellten Elementen mit den Bezugszeichen 1 bis 10 auch noch die elektrischen Bauteile der Beleuchtungseinrichtung. Die gesamte Montageeinheit kann in das Gehäuse eingeführt und befestigt werden. Das ermöglicht eine besonders schnelle, einfache und weitgehend automatisierbare Montage des Kabelbaums im Inneren des Gehäuses einer Beleuchtungseinrichtung und Kontaktierung der elektrischen Bauteile.

Figur 3 zeigt die Kabelkanäle 1 aus den Figuren 1 und 2 in einem in ein Gehäuse 13 einer Beleuchtungseinrichtung eingebauten Zustand. In dem dargestellten Ausführungsbeispiel ist die Beleuchtungseinrichtung als ein Kraftfahrzeugscheinwerfer ausgebildet. Selbstverständlich kann sie auch als eine beliebige Signal-, Heck- oder Bugleuchte ausgebildet sein. Das Scheinwerfergehäuse 13 besteht vorzugsweise aus Kunststoff und weist in Lichtaustrittsrichtung eine Leichtaustrittsöffnung auf, die am Ende der Montage des Scheinwerfers durch eine lichtdurchlässige Abdeckscheibe verschlossen wird. Im Inneren des Gehäuses 13 werden im Rahmen der Montage des Scheinwerfers Lichtmodule (nicht dargestellt) und andere elektrische Bauteile (z.B. Steuergeräte, Zündgeräte, Lichtquellen, Aktuatoren zum Verstellen der Lichtmodule in horizontaler und/oder vertikaler Richtung) angeordnet. Die Lichtmodule können als Reflexions- oder als Projektionsmodul ausgebildet sein. Um einen Zugriff auf die Lichtmodule oder Teile davon im eingebauten Zustand des Scheinwerfers zu ermöglichen, verfügt das Gehäuse 13 über zahlreiche Montageöffnungen 14, die im Betrieb des Scheinwerfers durch Deckel (nicht dargestellt) verschlossen sind. Außerdem sind im Gehäuse 13 Lampenhalterungen 15 zur Aufnahme von Lichtquellen, bspw. von Blink- oder Positionsleuchten, integriert. Zum elektrischen Kontaktieren der Lichtmodule und der anderen elektrischen Bauteile werden im Rahmen der Montage des Scheinwerfers Kabel 3 eines Kabelbaums verlegt. Die vorliegende Erfindung betrifft eine Möglichkeit, wie die Handhabung und Montage des Kabelbaums deutlich vereinfacht und beschleunigt und in höherem Maße automatisiert werden kann.

In Figur 3 ist der Kabelbaum aus Figur 1 in Blickrichtung auf die Figur 3 gesehen vorne links im Inneren des Gehäuses 13 angeordnet. Der Kabelbaum aus Figur 2 ist etwas oberhalb und weiter hinten im Gehäuse 13 angeordnet. In dem dargestellten Beispiel werden die Kabelbäume zunächst durch die Lichtaustrittsöffnung als Montageeinheiten von vorne in das Innere des Gehäuses 13 eingeführt. Dabei treten die Führungsstifte 11 mit den entsprechenden Öffnungen 8 der Führungsmittel 7 in Eingriff. In dem dargestellten Beispiel sind die Stifte 11 am Gehäuse 13 und die Öffnungen 8 am Kabelkanal 1 ausgebildet. Selbstverständlich wäre es auch denkbar, einzelne oder alle Führungsmittel 7 umgekehrt auszugestalten, so dass die Stifte 11 am Kabelkanal 1 und die Öffnungen 8 am Gehäuse ausgebildet sind. Das Einführen der Kabelbäume in das Gehäuse wird durch die steife und starre Struktur des Kabelkanals 1 erheblich erleichtert und ermöglicht eine automatisierte Montage bspw. mittels Roboter. Durch die Führungsmittel 7 sind die Kabelkanäle 1 am Ende der Einführbewegung in der xy-Ebene am Gehäuse festgelegt. Zur Sicherung der Kanäle 1 in z-Richtung sind Sicherungsmittel 9 vorgesehen. In dem vorliegenden Fall werden Schrauben 12 in die entsprechenden Öffnungen 10 der Sicherungsmittel 9 eingeführt und mit dem Gehäuse 13 verschraubt. Damit sind die Kabelbäume innerhalb kürzester Zeit auf einfache Weise im Gehäuse 13 der Beleuchtungseinrichtung montiert.

Anschließend werden die Lichtmodule und die anderen elektrischen Bauteile in das Gehäuseinnere eingeführt und dort mit den entsprechenden Kabel 3 des Kabelbaums kontaktiert. Dies geschieht dadurch, dass die jeweiligen Steckerkontaktelemente 5 des Kabelbaums mit den entsprechenden Steckerkontaktelementen der Lichtmodule bzw. elektrischen Bauteile zusammengesteckt werden. Dabei besteht keine Gefahr, dass sich der bereits montierte Kabelbaum wieder vom Gehäuse löst, da der mittels des Kabelkanals sicher und zuverlässig am Gehäuse 13 befestigt ist. Zudem kann die Kontaktierung beschleunigt werden, indem die Steckerkontaktelemente 5 des Kabelbaums an dafür vorgesehenen Aufnahmepositionen 6 des Kabelkanals 1 lösbar befestigt sind. Die Steckerkontaktelemente 5 können also unmittelbar ohne langes Suchen ergriffen und mit den entsprechenden Steckerkontaktelementen der Lichtmodule bzw. elektrischen Bauteile zusammengesteckt werden. Nach der Kontaktierung werden die Lichtmodule bzw. elektrischen Bauelemente in die für sie jeweils vorgesehene Position eingesetzt und dort befestigt.

## Patentansprüche

1. Verfahren zum Verlegen von Kabeln (3) eines Kabelbaums im Inneren eines Gehäuses (13) einer Beleuchtungseinrichtung eines Kraftfahrzeugs, wobei die zu verlegenden Kabel (3) an einem Kabelkanal (1) befestigt werden und der mindestens eine Kabelkanal (1) mit den darin verlaufenden Kabeln (3) als Montageeinheit in das Innere des Gehäuses (13) eingeführt und dort am Gehäuse (13) befestigt wird, **gekennzeichnet durch** die Schritte:
- die zu verlegenden Kabel (3) werden zumindest teilweise außerhalb des Gehäuses (13) in einen Aufnahmeabschnitt (2) mindestens eines vorgefertigten, vom Gehäuse (13) separaten starren Kabelkanals (1) eingesetzt; und
- die in den Aufnahmeabschnitt (2) eingesetzten Kabel (3) werden in dem mindestens einen Kabelkanal (1) befestigt.

2. Verfahren nach Anspruch 1, **dadurch gekennzeichnet, dass** durch den mindestens einen Kabelkanal (1) der Montageeinheit alle Kabel (3) des Kabelbaums zu einem einzigen starren Kabelskelett zusammengefasst werden, das als Ganzes in das Innere des Gehäuses (13) eingeführt und dort am Gehäuse (13) gesichert wird.

3. Verfahren nach Anspruch 1 oder 2, **dadurch gekennzeichnet, dass** jeder Kabelkanal (1) oder das Kabelskelett mittels geeigneter Führungselemente (7, 11) in das Gehäuse (13) eingeführt und an einer vorgegebenen Position an einer Innenseite des Gehäuses (13) angeordnet wird, jeder Kabelkanal (1) oder das Kabelskelett durch die Führungselemente (7, 11) in der vorgegebenen Position und in einer vorgegebenen Ausrichtung relativ zu dem Gehäuse (13) gehalten wird und jeder Kabelkanal (1) oder das Kabelskelett am Gehäuse (13) gesichert wird.

4. Verfahren nach einem der Ansprüche 1 bis 3, **dadurch gekennzeichnet, dass** jeder Kabelkanal (1) oder das Kabelskelett nur an einer einzigen Stelle am Gehäuse (13) gesichert wird.

5. Verfahren nach Anspruch 3, **dadurch gekennzeichnet, dass** die Führungselemente (7, 11) einerseits sich in Richtung der Einführbewegung des Kabelkanals (1) bzw. des Kabelskeletts erstreckende Führungsstifte (11) am Gehäuse (13) oder dem Kabelkanal (1) bzw. dem Kabelskelett und andererseits entsprechende Öffnungen (7) oder Aussparungen am Kabelkanal (1) bzw. Kabelskelett oder am Gehäuse (13) umfassen.

6. Verfahren nach einem der Ansprüche 1 bis 5, **dadurch gekennzeichnet, dass** der mindestens eine Kabelkanal (1) bzw. das Kabelskelett mittels Sicherungsmittel (9), insbesondere mittels mindestens einer Schraube oder Clipsverbindung, am Gehäuse (13) gesichert bzw. befestigt wird.

7. Verfahren nach einem der Ansprüche 1 bis 6, **dadurch gekennzeichnet, dass** die in dem mindestens einen Kabelkanal (1) verlaufenden Kabel (3) mittels Befestigungsmittel, insbesondere mittels Kabelbinder, Klammern, Filmscharnierelemente oder eines Klebebands, an dem mindestens einen Kabelkanal (1) befestigt werden.

8. Verfahren nach einem der Ansprüche 1 bis 7, **dadurch gekennzeichnet, dass** nach dem Einsetzen und Befestigen der Kabel (3) in dem mindestens einen Kabelkanal (1) an den Enden der Kabel (3) angeschlossene Steckkontaktelemente (5) an dafür am Kabelkanal (1) vorgesehenen Aufnahmepositionen (6) lösbar befestigt werden.

9. Verfahren nach Anspruch 1, **dadurch gekennzeichnet, dass** eine Kontaktierung eines Lichtmoduls oder eines anderen elektrischen Bauelements der Beleuchtungseinrichtung mit zumindest einem Teil der Kabel (3) vor der Montage des mindestens einen Kabelkanals (1) bzw. des Kabelskeletts im Gehäuse (13), also noch außerhalb des Gehäuses (13) erfolgt und die elektrischen Bauelemente zusammen mit dem mindestens einen Kabelkanal (1) bzw. dem Kabelskelett als Montageeinheit im Inneren des Gehäuses (13) angeordnet und befestigt werden.

10. Vorrichtung zum Führen und Befestigen von Kabeln (3) eines Kabelbaums im Inneren eines Gehäuses (13) einer Beleuchtungseinrichtung eines Kraftfahrzeugs, **dadurch gekennzeichnet, dass** die Vorrichtung (1) mindestens einen vorgefertigten, vom Gehäuse (13) separaten starren Kabelkanal (1) mit einem Aufnahmeabschnitt (2) zur Aufnahme zumindest eines Teils der zu verlegenden Kabel (3), Mittel zum Befestigen der von dem mindestens einen Kabelkanal (1) aufgenommenen Kabel (3) in dem mindestens einen Kabelkanal (1) und Mittel (7, 11; 9) zur Befestigung des mindestens einen Kabelkanals (1) mit den darin verlaufenden Kabeln (3) als Montageeinheit im Inneren des Gehäuses (13) aufweist.

11. Vorrichtung nach Anspruch 10, **dadurch gekennzeichnet, dass** die Form des mindestens einen Kabelkanals (1) der Form eines Innenbereichs des Gehäuses (13) entspricht, wo der Kabelkanal (1) angeordnet und befestigt wird.

12. Vorrichtung nach Anspruch 10 oder 11, **dadurch gekennzeichnet, dass** der mindestens einen Kabelkanal (1) aus Kunststoff gefertigt ist.

13. Vorrichtung nach einem der Ansprüche 10 bis 12, **dadurch gekennzeichnet, dass** der mindestens eine Kabelkanal (1) Aufnahmemittel (6) zum lösbaren Befestigen von an den Enden zumindest eines Teils der Kabel (3) angeschlossenen Steckkontaktelementen (5) aufweist.

14. Vorrichtung nach einem der Ansprüche 10 bis 13, **dadurch gekennzeichnet, dass** der Kabelkanal (1) einen U- oder V-förmigen Querschnitt aufweist.

## Claims

1. A method for laying cables (3) of a cable harness in the interior of a housing (13) of a lighting device of a motor vehicle, in which the cables (3) to be laid are fastened to a cable conduit (1), and the at least one cable conduit (1) with the cables (3) extending in it is introduced as a mounting unit into the interior of the housing (13) and fastened there to the housing (13), **characterized by** the following steps:
- the cables (3) to be laid are inserted at least partially outside the housing (13) into a receiving portion (2) of at least one prefabricated rigid cable conduit (1) that is separate from the housing (13); and
- the cables (3) inserted into the receiving portion (2) are fastened in the at least one cable conduit (1).

2. The method according to claim 1, **characterized in that** by the at least one cable conduit (1) of the mounting unit, all the cables (3) of the cable harness are combined into a single rigid cable skeleton, which is introduced as a whole into the interior of the housing (13) and there secured to the housing (13).

3. The method according to claim 1 or 2, **characterized in that** each cable conduit (1) or the cable skeleton is introduced into the housing (13) by means of suitable guide elements (7, 11) and disposed at a predetermined position on an inside of the housing (13); each cable conduit (1) or the cable skeleton is retained in the predetermined position and in a predetermined orientation relative to the housing (13) by the guide elements (7, 11); and each cable conduit (1) or the cable skeleton is secured to the housing (13).

4. The method according to one of claims 1-3, **characterized in that** each cable conduit (1) or the cable skeleton is secured to the housing (13) at only a single point.

5. The method according to claim 3, **characterized in that** the guide elements (7, 11) on the one hand include guide pins (11) on the housing (13) or on the cable conduit (1) or the cable skeleton, which pins extend in the direction of the introduction motion of the cable conduit (1) or the cable skeleton, and on the other hand, the guide elements include corresponding openings (7) or recesses in the cable conduit (1) or cable skeleton or on the housing (13).

6. The method according to one of claims 1-5, **characterized in that** the at least one cable conduit (1) or the cable skeleton is secured or fastened on the housing (13) by securing means (9), in particular by means of a screw or a clip connection.

7. The method according to one of claims 1-6, **characterized in that** the cables (3) extending in the at least one cable conduit (1) are fastened to the at least one cable conduit (1) by fastening means, in particular by means of cable binders, clamps, film hinge elements or an adhesive tape.

8. The method according to one of claims 1-7, **characterized in that** after the insertion and fastening of the cables (3) in the at least one cable conduit (1), plug contact elements (5) connected to the ends of the cables (3) are detachably fastened at receiving positions (6) provided for the purpose on the cable conduit (1).

9. The method according to claim 1, **characterized in that** electrical contacting of a light module or other electrical component of the lighting device to at least some of the cables (3) is effected before the mounting of the at least one cable conduit (1) or cable skeleton in the housing (13), and thus still outside the housing (13), and the electrical components together with the at least one cable conduit (1) or cable skeleton are disposed and fastened as a mounting unit in the interior of the housing (13).

10. A device for guiding and fastening cables (3) of a cable harness in the interior of a housing (13) of a lighting device of a motor vehicle, **characterized in that** the device (1) has at least one prefabricated rigid cable conduit (1), separate from the housing (13), with a receiving portion (2) for receiving at least some of the cables (3) to be laid; means for fastening the cables (3) received by the at least one cable conduit (1) in the at least one cable conduit (1); and means (7, 11; 9) for fastening the at least one cable conduit (1), with the cables (3) extending in it, as a mounting unit in the interior of the housing (13).

11. The device according to claim 10, **characterized in that** the shape of the at least one cable conduit (1) corresponds to the shape of an internal region of the housing (13) where the cable conduit (1) is disposed and fastened.

12. The device according to claim 10 or 11, **characterized in that** the at least one cable conduit (1) is made of plastic.

13. The device according to one of claims 10-12, **characterized in that** the at least one cable conduit (1) has receiving means (6) for detachable fastening of plug contact elements (5) that are connected to the ends of at last some of the cables (3).

14. The device according to one of claims 10-13, **characterized in that** the cable conduit (1) has a U- or V-shaped cross section.

## Revendications

1. Procédé de pose de câbles (3) d'un faisceau de câbles à l'intérieur d'un boîtier (13) d'un dispositif d'éclairage d'un véhicule automobile, les câbles (3) à poser étant fixés sur un caniveau de câbles (1) et le ou les caniveaux de câbles (1) dans lesquels s'étendent les câbles (3) étant introduits en tant qu'unité de montage à l'intérieur du boîtier (13) et y étant fixés sur le boîtier (13), **caractérisé par** les étapes suivantes:
- les câbles (3) à poser sont insérés au moins en partie à l'extérieur du boîtier (13) dans une partie de logement (2) au moins d'un caniveau de câbles rigide (1) préfabriqué et séparé du boîtier (13); et
- les câbles (3) insérés dans la partie de logement (2) sont fixés dans le ou les caniveaux de câbles (1).

2. Procédé selon la revendication 1, **caractérisé en ce que** tous les câbles (3) du faisceau de câbles sont réunis par le ou les caniveaux de câbles (1) de l'unité de montage pour obtenir un seul squelette de câbles rigide introduit en bloc à l'intérieur du boîtier (13) et bloqué à cet endroit sur le boîtier (13).

3. Procédé selon la revendication 1 ou 2, **caractérisé en ce que** chaque caniveau de câbles (1) ou le squelette de câbles est introduit dans le boîtier (13) au moyen d'éléments de guidage (7, 11) appropriés et disposé dans une position prédéfinie sur un côté intérieur du boîtier (13), chaque caniveau de câble (1) ou le squelette de câbles étant retenu par les éléments de guidage (7, 11) dans la position prédéfinie et dans une orientation prédéfinie par rapport au boîtier (13) et chaque caniveau de câble (1) ou le squelette de câbles étant bloqué sur le boîtier (13).

4. Procédé selon l'une quelconque des revendications 1 à 3, **caractérisé en ce que** chaque caniveau de câbles (1) ou le squelette de câbles n'est bloqué sur le boîtier (13) qu'en un seul endroit.

5. Procédé selon la revendication 3, **caractérisé en ce que** les éléments de guidage (7, 11) comprennent d'une part des broches de guidage (11) s'étendant en direction du déplacement d'introduction du caniveau de câbles (1) ou du squelette de câbles sur le boîtier (13) ou le caniveau de câbles (1) ou le squelette de câbles et d'autre part des ouvertures (7) correspondantes ou des évidements sur le caniveau de câble (1) ou le squelette de câbles ou sur le boîtier (13).

6. Procédé selon l'une quelconque des revendications 1 à 5, **caractérisé en ce que** le ou les caniveaux de câbles (1) ou le squelette de câbles sont bloqués ou fixés sur le boîtier (13) à l'aide de moyens de blocage (9), en particulier au moyen d'au moins une vis ou un assemblage par clip.

7. Procédé selon l'une quelconque des revendications 1 à 6, **caractérisé en ce que** le ou les câbles (3) s'étendant dans le ou les caniveaux de câble (1) sont fixés sur le ou les caniveaux de câbles (1) à l'aide de moyens de fixation, en particulier à l'aide de colliers, de brides de fixation, d'éléments de charnière pelliculaire ou d'une bande adhésive.

8. Procédé selon l'une quelconque des revendications 1 à 7, **caractérisé en ce qu'**après l'insertion et la fixation des câbles (3) dans le ou les caniveaux de câbles (1), des éléments de contact à fiche (5) raccordés aux extrémités des câbles (3) sont fixés détachables dans des positions de logement (6) prévues pour cela sur le caniveau de câbles (1).

9. Procédé selon la revendication 1, **caractérisé en ce qu'**une mise en contact électrique d'un module lumineux ou d'un autre composant électrique du dispositif d'éclairage avec au moins une partie des câbles (3) s'effectue avant le montage du ou des caniveaux de câbles (1) ou du squelette de câbles dans le boîtier (13), par conséquent encore à l'extérieur du boîtier (13) et les composants électriques sont fixés conjointement avec le ou les caniveaux de câble (1) ou le squelette de câble en tant qu'unité de montage à l'intérieur du boîtier (13).

10. Dispositif de guidage et de fixation de câbles (3) d'un faisceau de câbles à l'intérieur d'un boîtier (13) d'un dispositif d'éclairage d'un véhicule automobile, **caractérisé en ce que** le dispositif (1) comprend au moins un caniveau de câble rigide (1) préfabriqué et séparé du boîtier (13), doté d'une partie de logement (2) destinée à loger au moins une partie des câbles (3) à poser, des moyens destinés à fixer les câbles (3) logés par le ou les caniveaux de câble (1) dans le ou les caniveaux de câble (1) et des moyens (7, 11; 9) destinés à fixer le ou les caniveaux de câble (1) dans lesquels s'étendent les câbles (3) en tant qu'unité de montage à l'intérieur du boîtier (13).

11. Dispositif selon la revendication 10, **caractérisé en ce que** la forme du ou des caniveaux de câbles (1) correspond à la forme d'une zone intérieure du boîtier (13), à l'endroit où le caniveau de câbles (1) est disposé et fixé.

12. Dispositif selon la revendication 10 ou 11, **caractérisé en ce que** le ou les caniveaux de câbles (1) sont fabriqués en matière plastique.

13. Dispositif selon l'une quelconque des revendications 10 à 12, **caractérisé en ce que** le ou les caniveaux de câble (1) comprennent des moyens de logement (6) destinés à la fixation détachable d'éléments de contact à fiche (5) raccordés aux extrémités d'au moins une partie des câbles (3).

14. Dispositif selon l'une quelconque des revendications 10 à 13, **caractérisé en ce que** le caniveau de câbles (1) présente une section transversale en forme de U ou de V.
